# EUROPEAN PATENT SPECIFICATION

(11) **EP 3 021 613 B1**
(45) Date of publication and mention of the grant of the patent: **03.07.2019**
(21) Application number: 13889021.5
(22) Date of filing: 08.07.2013
(51) Int. Cl.: H04W 36/00

(54) **METHOD AND DEVICE FOR CELL SWITCHING**
VERFAHREN UND VORRICHTUNG ZUR ZELLENVERMITTLUNG
PROCÉDÉ ET DISPOSITIF DE COMMUTATION DE CELLULE

(43) Date of publication of application: 18.05.2016
(73) Proprietor: Huawei Technologies Co., Ltd., Longgang District Shenzhen, Guangdong 518129 (CN)
(72) Inventor: SUN, Haishan, Shenzhen Guangdong 518129 (CN); NIU, Xiaoli, Shenzhen Guangdong 518129 (CN)
(74) Representative: Isarpatent
(86) International application number: PCT/CN2013/079010
(87) International publication number: WO 2015/003303

(56) References cited:
- CN-A- 101 048 001
- CN-A- 101 505 514
- CN-A- 101 772 108
- CN-A- 101 888 639
- US-A- 6 075 990
- US-A1- 2008 159 226
- US-A1- 2011 228 745

## Description

### TECHNICAL FIELD

The present invention relates to the communications field, and in particular, to a cell handover method and apparatus.

### BACKGROUND

Wireless communications has entered a period of explosive growth in data services. To increase a network capacity and reduce transmission costs, the industry has proposed a heterogeneous network (Heterogeneous Network, Hetnet) technology. A heterogeneous network is formed by multiple cells of different sizes and types, including a macro cell (Macro cell) and a micro-type cell. The micro-type cell includes: a micro cell (Micro cell), a pico cell (Pico Cell), a femto cell (Femto Cell), a remote radio head (Remote Radio Head, RRH) type cell, and the like. Deploying more micro-type cells for a region with dense traffic can effectively increase a network capacity in the region. Moreover, the micro-type cell has a small scale and lower capital expenditure (Capital Expenditure, Capex) and operating expense (Operating Expense, Opex). Therefore, many operators attach importance to the heterogeneous network and the heterogeneous network is an important direction in which a wireless network evolves.

Handover from a macro cell to a micro-type cell means that a user equipment (User Equipment, UE) sends a service quality report to a source node while camping on the macro cell, and the source node may hand over, according to the service quality report, the UE from a current serving macro cell to another micro-type cell with better service quality.

In a scenario of inter-frequency networking of a current macro cell and a micro-type cell, if a large quantity of micro-type cells that have a different frequency from the macro cell are actually deployed in a coverage area of the macro cell, when a UE is to be handed over from the macro cell to those micro-type cells that have a different frequency from the macro cell, not all those actually deployed micro-type cells can be configured as real neighboring cells of the macro cell because a neighboring cell resource on a macro cell side and configurable neighboring cells are limited. Therefore, handover from the macro cell to the micro-type cell that has a different frequency from the macro cell cannot be implemented.

Document US 2008 / 159 226 A1 discloses a method for handing over user equipment based on a pilot signal of the respective base stations.

### SUMMARY

The present invention is defined by the appended claims.

Provided is a cell handover method, comprising:
receiving (21), by a target base station, a relocation request message, wherein the relocation request message is used to indicate a guide cell that is of the target base station and to which a user equipment is to be handed over from a source cell of a source base station;
handing over (22), by the target base station, the user equipment to the guide cell that has the same frequency as the source cell of the source base station but has a different primary scrambling code according to the relocation request message; and
handing over (23), by the target base station, the user equipment from the guide cell to a real target cell of the target base station that has a different frequency from the guide cell but has the same primary scrambling code.

The receiving, by a target base station, a relocation request message may comprise:
receiving, by the target base station, the relocation request message on a frequency channel that is different from a working frequency channel of the target base station.

The handing over, by the target base station, the user equipment from the guide cell to a real target cell of the target base station may be specifically:
handing over, by the target base station, the user equipment from the guide cell to the real target cell of the target base station by means of physical channel reconfiguration.

Before the handing over, by the target base station, the user equipment to the guide cell according to the relocation request message, the method may further comprise:
determining whether the guide cell is in a working state; wherein
the handing over, by the target base station, the user equipment to the guide cell according to the relocation request message comprises:
   when the target base station determines that the guide cell is in the working state, handing over, by the target base station, the user equipment to the guide cell according to the relocation request message.

The source base station is a macro base station, and the target base station may be a micro base station.

Disclosed is also a cell handover apparatus comprising:
a receiving unit (71), configured to receive a relocation request message, wherein the relocation request message is used to indicate a guide cell that is of the apparatus and to which a user equipment is to be handed over from a source cell of a source base station and that has the same frequency as the source cell of the source base station but has a different primary scrambling code;
a handover unit (72), configured to hand over the user equipment to the guide cell according to the relocation request message; wherein
the handover unit (72) is further configured to hand over the user equipment from the guide cell to a real target cell of the apparatus that has a different frequency from the guide cell but has the same primary scrambling code.

The receiving unit (71) may be specifically configured to:
receive the relocation request message on a frequency channel that is different from a working frequency channel of the apparatus.

The handover unit (72) may be specifically configured to:
hand over the user equipment from the guide cell to the real target cell of the apparatus by means of physical channel reconfiguration.

The apparatus may further comprise:
a determining unit (73), configured to: before the handover unit (72) hands over the user equipment to the guide cell according to the relocation request message, determine whether the guide cell is in a working state; wherein
the handover unit (72) is specifically configured to:
   when the determining unit (73) determines that the guide cell is in the working state, hand over the user equipment to the guide cell according to the relocation request message.

According to the cell handover method and apparatus provided in the embodiments of the present invention, when handover is performed between inter-frequency cells, a UE is first handed over from a source cell to a guide cell that has a same frequency as the source cell, and handed over from the guide cell to a real cell that has a same PSC as the guide cell. Handover between the source cell and the guide cell is handover between intra-frequency cells, and the guide cell has the same PSC as the real cell; this can resolve a problem that in the case of inter-frequency networking of a macro cell and a micro-type cell, cell handover cannot be implemented because configurable neighboring cells are limited.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a cell handover method according to an embodiment which is not part of the present invention;
FIG. 2A and FIG. 2B a flowchart of another cell handover method according to an embodiment of the present invention;
FIG. 3A is a schematic diagram of an application scenario of cell handover according to an embodiment of the present invention;
FIG. 3B is a schematic diagram of a cell handover method for the application scenario shown in FIG. 3A;
FIG. 3C is a schematic diagram of a cell handover method for the application scenario shown in FIG. 3A;
FIG. 4 is a schematic diagram of another application scenario of cell handover according to an embodiment of the present invention;
FIG. 5 is a schematic diagram of still another application scenario of cell handover according to an embodiment of the present invention;
FIG. 6A is a structural block diagram of a cell handover apparatus according to an embodiment which is not part of the present invention;
FIG. 6B is another structural block diagram of a cell handover apparatus according to an embodiment which is not part of the present invention;
FIG. 7A is a structural block diagram of a cell handover apparatus according to an embodiment of the present invention;
FIG. 7B is another structural block diagram of a cell handover apparatus according to an embodiment of the present invention;
FIG. 8 is a structural block diagram of a user equipment according to an embodiment which is not part of the present invention;
FIG. 9A is a structural block diagram of an RNC according to an embodiment which is not part of the present invention;
FIG. 9B is another structural block diagram of an RNC according to an embodiment which is not part of the present invention;
FIG. 10A is a structural block diagram of a target base station according to an embodiment of the present invention;
FIG. 10B is another structural block diagram of a target base station according to an embodiment of the present invention; and
FIG. 11 is a structural block diagram of a user equipment according to an embodiment which is not part of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

A technology described in this specification may be used in various communications systems, for example, a Wideband Code Division Multiple Access Wireless (WCDMA, Wideband Code Division Multiple Access Wireless) system, a Long Term Evolution (LTE, Long Term Evolution) system, and other communications systems of this type.

Various aspects are described in this specification with reference to a terminal and/or a base station and/or a base station controller.

A user equipment may be a wireless terminal. The wireless terminal may refer to a device that provides a user with voice and/or data connectivity, a handheld device with a radio connection function, or another processing device connected to a radio modem. The wireless terminal may communicate with one or more core networks through a radio access network (RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device in communication with a wireless terminal by using one or more sectors on an air interface in an access network. The base station may be configured to mutually convert a received over-the-air frame and an IP packet and serve as a router between the wireless terminal and a remaining portion of the access network, where the remaining portion of the access network may include an Internet Protocol (IP) network. The base station may also coordinate attribute management of the air interface. For example, the base station may be a base station (NodeB) in the WCDMA, or may be an evolved NodeB (NodeB, or eNB, or e-NodeB, evolutional Node B) in the LTE, which is not limited in the present invention.

A source node and a target node may be a base station controller (BSC, base station controller) in the GSM or CDMA, or a radio network controller (RNC, Radio Network Controller) in the WCDMA, which is not limited in the present invention.In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

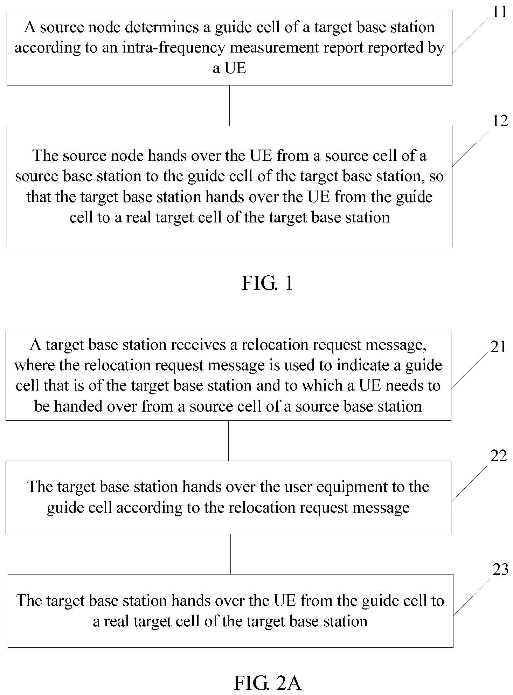

FIG. 1 is a flowchart of a cell handover method according to an embodiment which is not part of the present invention. Referring to FIG. 1, this embodiment which is not part of the present invention provides a cell handover method, where the method is described based on a source node, and the source node may be an RNC that serves a source cell. The method may include:
11. The source node determines a guide cell of a target base station according to an intra-frequency measurement report reported by a UE.

The source node may be the RNC on a source cell side, and the source cell may be a macro cell of a macro base station. In this embodiment which is not part of the present invention, the guide cell is a virtual cell that has a same frequency as the source cell but has a different PSC, and the guide cell is a cell to which the UE first is to be handed over from the source cell. The guide cell mentioned in this embodiment which is not part of the present invention is set for the macro cell and is used to hand over the UE from the macro cell to the guide cell.

The source node determines, according to the intra-frequency measurement report reported by the UE, that the determination of the guide cell is performed in a case in which the UE meets a cell handover condition. In a scenario of inter-frequency networking of a macro cell and a micro-type cell, there may be multiple micro-type cells in a coverage area of one macro cell. When the UE enters, from the macro cell, an inter-frequency micro-type cell deployed in the coverage area of the macro cell, it is possible that the previously used macro cell already cannot meet a communication requirement; therefore, when the cell handover condition is met, the UE needs to be handed over to the inter-frequency micro-type cell. The cell handover condition may be that cell handover or the like is performed when channel quality is lower than a specified threshold, which is not limited in the present invention.

In this embodiment which is not part of the present invention, the source node may determine, according to the intra-frequency measurement report reported by the UE, a guide cell to which the UE is to be handed over.

Specifically, when channel quality between the UE and a serving cell (that is, the source cell) in which the UE is located deteriorates, and the cell handover condition is met, the RNC sends measurement control signaling to the UE, where the measurement control signaling instructs the UE to perform measurement on a neighboring cell.

The UE receives the measurement control signaling, measures channel quality of all neighboring cells based on a reference signal and an intra-frequency measurement control parameter to form intra-frequency measurement reports, and reports the intra-frequency measurement reports of all the cells to the RNC.

After receiving the measurement reports of all the cells, the RNC may learn channel quality between the UE and all the cells according to these measurement reports, and further determine the guide cell to which the UE is to be handed over.
12. The source node hands over the UE from a source cell of a source base station to the guide cell of the target base station, so that the target base station hands over the UE from the guide cell to a real target cell of the target base station.

The guide cell is the virtual cell that has a same frequency as the source cell but has a different PSC, and the real target cell is a real cell that has a different frequency from the guide cell but has a same PSC.

In this embodiment which is not part of the present invention, the source cell is a cell in which the UE is located before cell handover, and the guide cell is a cell to which the UE is to be handed over in the case of the first cell handover. The source cell may be a macro cell, and the real cell may be a real micro-type cell.

It should also be noted that, in this embodiment which is not part of the present invention, the source base station and the target base station are adjacent base stations. The source cell of the source base station is one cell in numerous cells of the source base station. Both the guide cell and the real target cell are cells in numerous cells of the target base station. The guide cell has a same frequency as the source cell, and the real target cell has a different frequency from the source cell.

In this embodiment which is not part of the present invention, a guide cell of the real target cell may be pre-configured. When there is only one macro cell in a macro network, a guide cell corresponding to the macro cell may be pre-configured for the real target cell. Similarly, when there are multiple inter-frequency macro cells in the macro network, one guide cell corresponding to each of the multiple inter-frequency macro cells may be pre-configured for the real target cell. That is, the real target cell may have multiple guide cells, and each macro cell of the multiple inter-frequency macro cells corresponds to one guide cell of the real target cell. As a result, when the UE is handed over from any macro cell to the real target cell, the UE may be first handed over to a guide cell corresponding to the macro cell and handed over from the guide cell to the real target cell. Handover from a macro cell to an inter-frequency micro-type cell is finally implemented.

Optionally, in an embodiment which is not part of the present invention, the intra-frequency measurement report reported by the UE may carry cell synchronization information OFF and Tm and a PSC that are of a peripheral cell of the UE. In this case, before the handing over, by the source node, the UE from a source cell to the guide cell of the target base station, the method may further include:
querying, by the source node, neighboring cell configuration according to the PSC of the peripheral cell of the UE, so as to acquire a cell identity of the guide cell; and
obtaining, by the source node by means of calculation, a system frame number offset (System Frame Number, SFN-Offset) between the guide cell and the source cell according to the cell synchronization information OFF and Tm.

In this case, step 12 of handing over, by the source node, the UE from a source cell of a source base station to the guide cell of the target base station may include: sending, by the source node, a relocation request message to the target base station to which the guide cell belongs, so that the target base station hands over the UE from the source cell to the guide cell according to the relocation request message, where the relocation request message carries a PSC of the guide cell, the cell identity of the guide cell, and the system frame number offset.

It should be noted that, in this embodiment which is not part of the present invention, the sending, by the source node, a relocation request message to the target base station to which the guide cell belongs may be that the source node sends the relocation request message to a target node (for example, an HNB GW or an RNC) by using a core network, and then the target node sends a relocation request message that carries guide cell indication information to the target base station.

In this embodiment which is not part of the present invention, to help the target base station to which the guide cell belongs receive the relocation request message without affecting normal communication, the relocation request message may be sent on a frequency channel that is different from a working frequency channel of the target base station. That is, if the working frequency channel of the target base station to which the guide cell belongs is a first frequency channel, the relocation request message is sent on a second frequency channel that is different from the first frequency channel.

After receiving the relocation request message that carries the guide cell indication information, the target base station to which the guide cell belongs may determine the guide cell of the target base station according to the relocation request message, and hand over the UE to the guide cell.

In this embodiment which is not part of the present invention, the UE itself has a function of measuring a scrambling code of a neighboring cell, can determine, according to comparison of service quality of a cell in which the UE is located and a neighboring cell, a target cell to which the UE is to be handed over, and report a scrambling code of the target cell to the source node in a form of a measurement report. The measurement report may be a quality detection report or the like. Due to a limitation on a function of the UE, the measurement report carries only a scrambling code of a guide cell but does not include an identity of the guide cell. After receiving the measurement report sent by the UE, the source node may hand over, according to identity information of a serving macro cell in which the UE is located and the scrambling code of the guide cell included in the measurement report, the UE to a cell that is adjacent to the serving macro cell and that uses the scrambling code of the guide cell.

Optionally, in an embodiment which is not part of the present invention, the source cell is a macro cell, and there is at least one real cell that has a different frequency from the source cell in a coverage area of the source cell, and before step 11 of determining, by the source node, a guide cell according to an intra-frequency measurement report reported by a UE, the cell handover method provided in this embodiment which is not part of the present invention may further include:
storing a virtual guide cell of the source cell corresponding to each real cell of the source cell.

In this case, step 11 of determining, by the source node, a guide cell according to an intra-frequency measurement report reported by a UE may include:
determining, by the source node, the guide cell from the stored virtual guide cell according to the intra-frequency measurement report reported by the UE.

Further, before step 11 of determining, by the source node, a guide cell according to an intra-frequency measurement report reported by a UE, the cell handover method provided in this embodiment of the present invention may further include:
storing a correspondence between a virtual neighboring cell of the macro cell and the virtual guide cell; and
the determining, by the source node, the guide cell from the stored virtual guide cell according to the intra-frequency measurement report reported by the UE includes:
   determining, by the source node, the guide cell from the stored virtual guide cell according to the intra-frequency measurement report reported by the UE and the correspondence between the virtual neighboring cell of the macro cell and the virtual guide cell.

In a specific implementation process, a user needs to pre-configure a guide cell of the real cell corresponding to the source cell, pre-configure a virtual neighboring cell of the source cell, and establish a correspondence between the virtual neighboring cell and the guide cell, where one virtual neighboring cell corresponds to multiple guide cells. In this embodiment which is not part of the present invention, a type of guide cells that have a same PSC may be configured as the virtual neighboring cells of the macro cell.

After the foregoing steps, a corresponding guide cell may be determined according to a virtual neighboring cell.

According to the cell handover method provided in this embodiment which is not part of the present invention, when handover is performed between inter-frequency cells, a UE is first handed over from a source cell to a guide cell that has a same frequency as the source cell and handed over from the guide cell to a real cell that has a same PSC as the guide cell, which can resolve a problem that in the case of inter-frequency networking of a macro cell and a micro-type cell, cell handover cannot be implemented because configurable neighboring cells are limited.

Corresponding to the foregoing method, an embodiment of the present invention further provides a cell handover method, where the method is described based on a target base station, and the target base station may be a base station of a micro-type cell, that is, a micro base station. Referring to FIG. 2A, the method includes:
21. The target base station receives a relocation request message, where the relocation request message is used to indicate a guide cell that is of the target base station and to which a UE is to be handed over from a source cell of a source base station.

The relocation request message may carry a PSC of the guide cell, a cell identity of the guide cell, and a system frame number offset between the source cell and the guide cell.

In this step, the receiving, by the base station, a relocation request message may include: receiving, by the target base station, the relocation request message on a frequency channel that is different from a working frequency channel of the target base station.

Specifically, the base station in this embodiment of the present invention may have dual frequency channels. One frequency channel is used for normal communication of a serving cell, and the other frequency channel corresponds to the guide cell, and may be used to receive the relocation request message.
22. The target base station hands over the user equipment to the guide cell according to the relocation request message.

The relocation request message carries the PSC of the guide cell, the cell identity of the guide cell, and the system frame number offset between the source cell and the guide cell. Therefore, the base station may determine, according to the information carried in the relocation request message, a guide cell to which the user equipment is to be handed over, and further hand over the user equipment to the guide cell.
23. The target base station hands over the UE from the guide cell to a real target cell of the target base station.

The guide cell of the target base station is a cell that has a same frequency as the source cell of the source base station but has a different primary scrambling code, and the real target cell of the target base station is a cell that has a different frequency from the guide cell but has a same primary scrambling code.

Further, step 23 of handing over, by the base station, the UE from the guide cell to a real target cell of the target base station may include:
handing over, by the target base station, the UE from the guide cell to the real target cell of the target base station by means of physical channel reconfiguration. As a result, only air interface information needs to be modified on a base station side, which can be completed inside the target base station, and the target base station does not need to interact with a core network, or a home NodeB gateway, or an RNC.

It should be noted that, in this embodiment of the present invention, the source base station and the target base station are neighboring base stations. The source cell of the source base station is one cell in numerous cells of the source base station. Both the guide cell and the real target cell are cells in numerous cells of the target base station. The guide cell has a same frequency as the source cell, and the real target cell has a different frequency from the source cell.

In this embodiment of the present invention, a guide cell of the real target cell may be pre-configured. When there is only one macro cell in a macro network, a guide cell corresponding to the macro cell may be pre-configured for the real target cell. Similarly, when there are multiple inter-frequency macro cells in the macro network, one guide cell corresponding to each of the multiple inter-frequency macro cells may be pre-configured for the real target cell. That is, the real target cell may have multiple guide cells, and each macro cell of the multiple inter-frequency macro cells corresponds to one guide cell of the real target cell. As a result, when the UE is handed over from any macro cell to the real target cell, the UE may be first handed over to a guide cell corresponding to the macro cell and handed over from the guide cell to the real target cell. Handover from a macro cell to an inter-frequency micro-type cell is finally implemented.

In an embodiment, before step 22 of handing over, by the target base station, the user equipment to the guide cell according to the relocation request message, the cell handover method provided in this embodiment of the present invention may further include:
determining whether the guide cell is in a working state.

In this case, step 22 of handing over, by the target base station, the user equipment to the guide cell according to the relocation request message includes:
when the target base station determines that the guide cell is in the working state, handing over the user equipment to the guide cell according to the relocation request message.

In this embodiment of the present invention, if it is determined that the guide cell is not in the working state, the UE is not handed over from the source cell of the source base station to the guide cell of the target base station until the guide cell is in the working state.

Further, in this embodiment of the present invention, the real target cell has at least one virtual guide cell, and the determining whether the guide cell is in a working state may include:
determining, according to a preset working sequence and working time for each virtual guide cell of the real target cell, whether the guide cell is in the working state.

In this embodiment of the present invention, the working sequence and working time for each virtual guide cell may be pre-configured by a user on the target base station.

According to the cell handover method provided in this embodiment of the present invention, when handover is performed between inter-frequency cells, a UE is first handed over from a source cell to a guide cell that has a same frequency as the source cell and handed over from the guide cell to a real target cell that has a same PSC as the guide cell, which can resolve a problem that in the case of inter-frequency networking of a macro cell and a micro-type cell, cell handover cannot be implemented because configurable neighboring cells are limited.

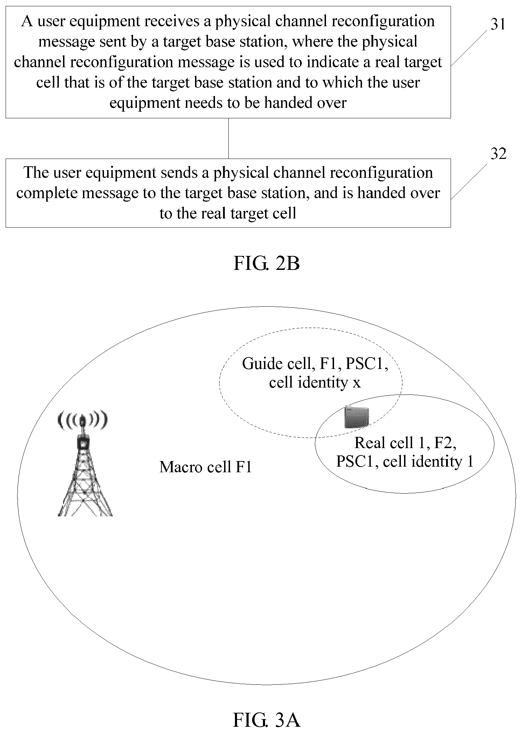

Accordingly, an embodiment of the present invention further provides a cell handover method. Referring to FIG. 2B, the method includes:
31. A user equipment receives a physical channel reconfiguration message sent by a target base station, where the physical channel reconfiguration message is used to indicate a real target cell that is of the target base station and to which the user equipment is to be handed over, and the real target cell of the target base station is a cell to which the user equipment is to be handed over after the target base station hands over the user equipment from a source cell of a source base station to a guide cell of the target base station.
32. The user equipment sends a physical channel reconfiguration complete message to the target base station, and is handed over to the real target cell.

The guide cell of the target base station is a cell that has a same frequency as the source cell of the source base station but has a different primary scrambling code, and the real target cell of the target base station is a cell that has a different frequency from the guide cell but has a same primary scrambling code.

After receiving the physical channel reconfiguration message, the user equipment performs physical channel reconfiguration, sends the physical channel reconfiguration complete message to the target base station after the configuration is complete, and is finally handed over to the real target cell of the target base station.

According to the cell handover method provided in this embodiment of the present invention, when handover is performed between inter-frequency cells, a UE is first handed over from a source cell to a guide cell that has a same frequency as the source cell and handed over from the guide cell to a real target cell that has a same PSC as the guide cell, which can resolve a problem that in the case of inter-frequency networking of a macro cell and a micro-type cell, cell handover cannot be implemented because configurable neighboring cells are limited.

In addition, it should be noted that, the cell handover method provided in this embodiment of the present invention includes a preparation phase before cell handover and a cell handover phase. The foregoing mainly describes the cell handover phase, and for a better understanding, the following further describes the two phases.

The preparation phase before the cell handover:
(1) An RNC receives configuration information entered by a user, where specific content of the configuration information may be configuring a handover policy of a guide cell as Iu interface hard handover or Iur interface hard handover, and configuring an intra-frequency measurement control parameter of a UE, so that an intra-frequency measurement report of the UE carries synchronization information of a source cell and the guide cell.
(2) After being powered on, a home NodeB sends an Iuh registration request message to a home NodeB gateway, where the Iuh registration request message carries information about a working cell, and also carries a frequency of the guide cell, a PSC of the guide cell, and a cell identity of an intra-frequency macro neighboring cell of the guide cell, and a system frame number (SFN, System Frame Number) offset between the working cell and another micro-type cell.
(3) The home NodeB gateway saves information about the guide cell, into an SFN offset information table, as information about an independent cell.
(4) The home NodeB gateway sends an Iuh registration response to the home NodeB to confirm that registration succeeds.

The cell handover method provided in this embodiment of the present invention is also applicable to an Iuh architecture and an Iub architecture.

When a micro base station uses a traditional Iub architecture, the micro base station has a same network architecture as a macro base station. The micro base station communicates with the RNC through an Iub interface, and the RNC performs radio resource allocation and management. In this case, a configuration phase before the cell handover includes only the foregoing step (1).

However, when the micro base station uses a standard Iuh architecture in 3GPP, the micro base station has a different network architecture from the macro base station. The micro base station communicates with the HNB-GW through an Iuh interface, and the RNC performs radio resource allocation and management. In this case, the configuration phase before the cell handover includes the foregoing steps (1) to (4).

The cell handover phase is specifically as follows:
When channel quality between the UE and a serving cell (for example, a macro cell) in which the UE is located deteriorates, the RNC sends measurement control signaling to the UE, where the measurement control signaling instructs the UE to perform measurement on a neighboring cell.

The UE receives the measurement control signaling, measures channel quality of all neighboring cells based on a reference signal and an intra-frequency measurement control parameter to form intra-frequency measurement reports, and sends the measurement reports of all the cells to the RNC.

After receiving the measurement reports of all the cells, the RNC may learn channel quality between the UE and all the cells according to these measurement reports. When determining that the UE meets an intra-frequency hard handover condition, the RNC determines that a cell to which the UE is to be handed over is the guide cell, and sends a relocation required (Relocation Required) message to a core network. The relocation required message carries a cell identity (Cell ID) of a source cell in which the UE is located and measurement reports of the source cell and the guide cell.

The core network receives the relocation required message, and sends a relocation request message (Relocation Request) to a target node to require the target node to prepare for relocation (that is, prepare a required resource). The target node may be a target RNC or a home NodeB gateway (HNB GW). Specifically, for an Iub architecture, the target node is the target RNC, and the relocation required message is forwarded to the target RNC; for an Iuh architecture, the target node is the target RNC, and the relocation required message is forwarded to the home NodeB gateway (HNB GW).

After receiving the relocation request message, the target RNC or the home NodeB gateway (HNB GW) parses the relocation request message to acquire the cell identity (Cell ID) of the source cell in which the UE is located, a PSC of the guide cell, and
synchronization information of the source cell and the guide cell; finally finds a guide cell of a real target cell by addressing; and sends the relocation request message to a target base station to which the guide cell belongs, where the relocation request message is used to indicate the guide cell that is of the real target cell of the target base station and to which the user equipment is to be handed over from a source cell of a source base station.

After receiving the relocation request message sent by the target RNC or the home NodeB gateway, the target base station parses the relocation request message to acquire the guide cell of the real target cell of the target base station, and hands over the UE from the source cell to the guide cell.

The target base station sends a physical channel reconfiguration (Physical Channel Reconfiguration) message to the UE, where the physical channel reconfiguration message carries a cell identity of the real target cell.

The UE receives the physical channel reconfiguration message, and sends a physical channel reconfiguration complete (Physical Channel Reconfiguration Complete) message to a base station in which the real target cell is located.

The base station in which the real target cell is located hands over the UE from the guide cell to the real target cell.

After the foregoing process, handover of a UE from a macro cell to a micro-type cell is finally completed in a heterogeneous network of a macro cell and an inter-frequency micro-type cell.

For a better understanding of the present invention, the following further describes the present invention by using several specific embodiments as examples. It should also be noted that the following enumerated embodiments are merely some embodiments of the present invention.

It should also be noted that, because the idea of the present invention has been described above in detail, for brevity, the following several enumerated embodiments are only described briefly. Therefore, for corresponding content in each embodiment, refer to the foregoing description.

It should also be noted that, the following embodiments separately describe a case in which one real cell corresponds to one macro cell, two macro cells, and more than three macro cells. Certainly, there may also be another real micro-type cell in a coverage area of a macro cell. However, a person skilled in the art understands that a case of the another real micro-type cell is similar to a case of the enumerated real micro-type cell, and may be correspondingly obtained.

### Embodiment 1

FIG. 3A is a schematic diagram of a cell handover case according to an embodiment of the present invention. Referring to FIG. 3A, this embodiment describes a macro-micro heterogeneous network including one macro cell and one micro-type cell (a real cell 1) in a coverage area of the macro cell. In this embodiment, a guide cell is established for the real cell 1 in advance. The macro cell uses a frequency F1 and the micro-type cell uses a frequency F2 for networking.

A cell handover method provided in this embodiment includes the following configuration phase before cell handover and the cell handover phase.

A process of the configuration phase before the cell handover is as follows:
1. A single pair of radio-frequency transceiver channels are used to establish, for the real cell 1, a guide cell that has a same frequency as the macro cell but has a different scrambling code, where a PSC of the guide cell is the same as a PSC of the real cell 1.
2. On a macro network side, the guide cell is configured as an intra-frequency virtual neighboring cell of the macro cell according to the PSC of the guide cell and a virtual cell identity; a handover policy corresponding to the guide cell is configured as Iu interface hard handover or Iur interface hard handover.
3. An intra-frequency measurement control parameter of a UE is configured, so that the UE adds synchronization information of a source cell and a target cell to an intra-frequency measurement report.

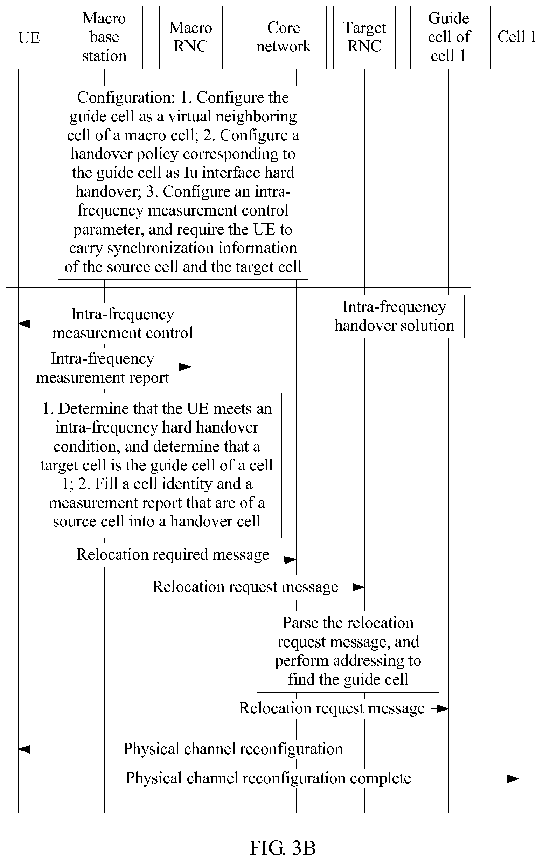

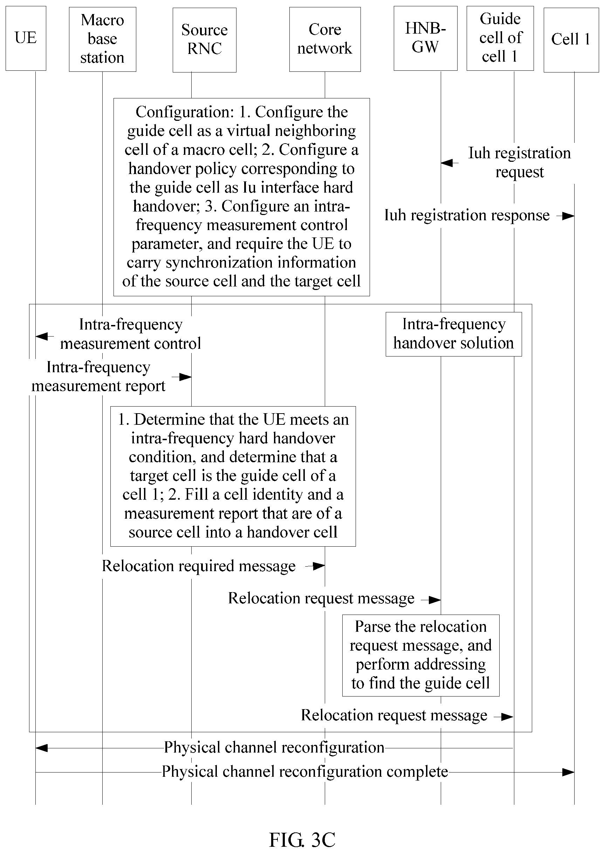

In this embodiment of the present invention, a base station on a micro-type cell side may use a traditional Iub architecture or a standard Iuh architecture in 3GPP. Accordingly, corresponding to the Iub architecture, an RNC may communicate with the base station on the micro-type cell side; corresponding to the Iuh architecture, an HNB-GW may communicate with the base station on the micro-type cell side. The following respectively describes cell handover processes in the two cases with reference to FIG. 3B and FIG. 3C.

### Case 1:

First, brief description of a cell handover phase in this case is given with reference to FIG. 3B.

### Cell handover phase:

When the UE initiates handover from the macro cell to a guide cell of a micro-type base station, a macro RNC and a target RNC perform incoming handover processing on intra-frequency Iu interface relocation (relocation), so as to complete determining and handover of a unique guide cell of a target micro-type base station.

The target micro-type base station performs physical channel reconfiguration on the UE once again, so as to hand over the UE to a real inter-frequency cell 1.Only air interface information is modified during this handover, which can be completed inside a base station, and the base station does not need to interact with an RNC or a core network.

For a specific handover process, refer to FIG. 3B and the foregoing description, and details are not described herein again.

### Case 2:

Brief description of a cell handover phase in this case is given in the following with reference to FIG. 3C.

### Cell handover phase:

An HNB is powered on and sends an Iuh registration request message to an HNB GW. In addition to information about a working cell of the HNB itself, the Iuh registration request message further carries the PSC of the guide cell, a real cell identity, a cell identity of each intra-frequency macro neighboring cell, and a system frame number offset between each intra-frequency macro neighboring cell and the guide cell. The HNB GW saves information about the guide cell, into a system frame number offset information table, as information about an independent cell.

When the UE initiates handover from the macro cell to a guide cell of the HBN, a macro RNC and the HNB GW perform incoming handover processing on intra-frequency Iu interface relocation (relocation), so as to complete determining and handover of a unique guide cell of a target HBN.

The target HNB performs physical channel reconfiguration on the UE once again, so as to hand over the UE to a real inter-frequency cell 1. Only air interface information is modified during this handover, which can be completed inside an HNB, and the HNB does not need to interact with an HNB GW or a core network.

For a specific handover process, refer to FIG. 3C and the foregoing description, and details are not described herein again.

According to the cell handover method provided in this embodiment of the present invention, when handover is performed between inter-frequency cells, a UE is first handed over from a source cell to a guide cell that has a same frequency as the source cell and handed over from the guide cell to a real cell that has a same PSC as the guide cell, which can resolve a problem that in the case of inter-frequency networking of a macro cell and a micro-type cell, cell handover cannot be implemented because configurable neighboring cells are limited.

### Embodiment 2

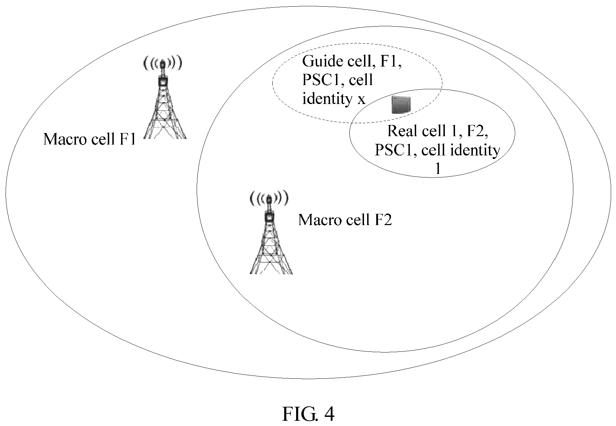

FIG. 4 is a schematic diagram of a cell handover case according to an embodiment of the present invention. Referring to FIG. 4, this embodiment describes a macro-micro heterogeneous network including two macro cells and one micro-type cell (a real cell 1). The two macro cells respectively use frequencies F1 and F2. The micro-type cell is in a coverage area of one macro cell (which is specifically in a coverage area of a macro cell F2 in this embodiment) of the two macro cells, and shares a frequency F2 of the macro cell. In this embodiment, a guide cell corresponding to the macro cell F1 is established for a real cell 1 in advance.

In this embodiment, a process of a configuration phase before cell handover is as follows:
1. A single pair of radio-frequency transceiver channels are used to establish, for a real cell 1, a guide cell that has a same frequency as a macro cell F1 but has a different scrambling code, where a PSC of the guide cell is the same as a PSC of the real cell 1.
2. On a macro cell F1 side, the guide cell is configured as an intra-frequency virtual neighboring cell of the macro cell F1 according to the PSC of the guide cell and a virtual cell identity; on a macro cell F2 side, the real cell 1 is configured as an intra-frequency virtual neighboring cell of the macro cell F2 according to a PSC of the real cell 1 and a virtual cell identity; on a macro RNC side, a handover policy corresponding to the guide cell is configured as Iu interface hard handover or Iur interface hard handover.
3. An intra-frequency measurement control parameter of a UE is configured, so that the UE carrys synchronization information of a source cell and a target cell in an intra-frequency measurement report.

A cell handover method provided in this embodiment is as follows:

### Case 1:

After being powered on, a base station sends an Iuh registration request message to an HNB GW, and reports the PSC of the guide cell, a real cell identity, a cell identity of each intra-frequency macro neighboring cell, and a system frame number offset between each intra-frequency macro neighboring cell and the guide cell.

When the UE initiates handover from the macro cell F1, the HNB GW determines a target cell according to a system frame number offset (SFN-offset) solution for an intra-frequency Iu interface, and delivers a handover message to the guide cell. The UE is first handed over to a guide cell of the real cell 1, and the base station then performs physical channel reconfiguration through an air interface once, so as to hand over the UE to a real inter-frequency real cell 1.Only air interface information is modified during this handover, which can be completed inside an HNB, and the HNB does not need to interact with an HNB GW or a core network.

When the UE initiates handover from the macro cell F2, the handover may be performed according to a normal intra-frequency handover process.

### Case 2:

When the UE initiates handover from the macro cell F1, an RNC determines a target cell according to a system frame number offset (SFN-offset) solution for an intra-frequency Iu interface, and delivers a handover message to the guide cell. The UE is first handed over to a guide cell of the real cell 1, and a base station then performs physical channel reconfiguration through an air interface once, so as to hand over the UE to a real inter-frequency real cell 1.Only air interface information is modified during this handover, which can be completed inside the base station, and the base station does not need to interact with an RNC or a core network.

When the UE initiates handover from the macro cell F2, the handover may be performed according to a normal intra-frequency handover process.

According to the cell handover method provided in this embodiment of the present invention, when handover is performed between inter-frequency cells, a UE is first handed over from a source cell to a guide cell that has a same frequency as the source cell and handed over from the guide cell to a real cell that has a same PSC as the guide cell, which can resolve a problem that in the case of inter-frequency networking of a macro cell and a micro-type cell, cell handover cannot be implemented because configurable neighboring cells are limited.

### Embodiment 3

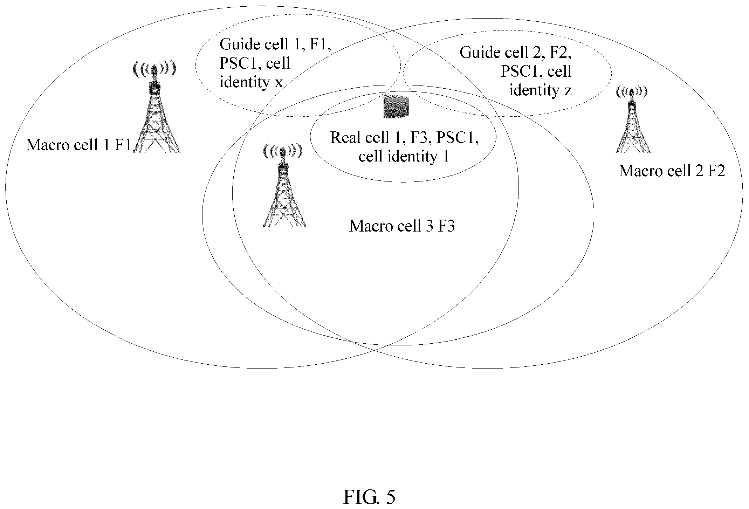

FIG. 5 is a schematic diagram of a cell handover case according to an embodiment of the present invention. Referring to FIG. 5, this embodiment describes a macro-micro heterogeneous network including three macro cells and one micro-type cell (a real cell 1). The three macro cells respectively use frequencies F1, F2, and F3. The micro-type cell is in a coverage area of one macro cell (which is specifically in a coverage area of a macro cell F3 in this embodiment) of the three macro cells, and shares a frequency F3 of the macro cell. In this embodiment, two guide cells are established for the real cell 1, where one guide cell is corresponding to the macro cell F1, and the other guide cell is corresponding to the macro cell F2.

In this embodiment, a process of a configuration phase before cell handover is as follows:
1. A single pair of radio-frequency transceiver channels are used to separately establish, for the real cell 1, a guide cell 1 that has a same frequency as the macro cell F1 but has a different scrambling code and a guide cell 2 that has a same frequency as the macro cell F2 but has a different scrambling code, where PSCs of the guide cell 1 and the guide cell 2 are the same as a PSC of the real cell 1.
2. On a macro cell F1 side, the guide cell 1 is configured as an intra-frequency virtual neighboring cell of the macro cell F1 according to the PSC of the guide cell 1 and a virtual cell identity; on a macro cell F2 side, the guide cell 2 is configured as an intra-frequency virtual neighboring cell of the macro cell F2 according to the PSC of the guide cell 2 and a virtual cell identity; on a macro cell F3 side, the real cell 1 is configured as an intra-frequency virtual neighboring cell of the macro cell F3 according to a PSC of the real cell 1 and a virtual cell identity; on a macro RNC side, a handover policy corresponding to a guide cell is configured as Iu interface hard handover or Iur interface hard handover.
3. An intra-frequency measurement control parameter of a UE is configured, so that the UE carrys synchronization information of a source cell and a target cell in an intra-frequency measurement report.

A cell handover method provided in this embodiment includes:

### Case 1:

After being powered on, a base station sends an Iuh registration request message to an HNB GW, and reports the PSC of the guide cell, a real cell identity, a cell identity of each intra-frequency macro neighboring cell, and a system frame number offset between each intra-frequency macro neighboring cell and the guide cell.

When the UE initiates handover from the macro cell F1, and if in this case, the guide cell 1 of the real cell 1 is in a working state, the HNB GW determines a target cell according to an intra-frequency Iu interface system frame number offset (SFN-offset) solution, and delivers a handover message to a base station corresponding to the real cell 1. The UE is first handed over to the guide cell 1, and the base station then performs physical channel reconfiguration through an air interface once, so as to hand over the UE to a real inter-frequency real cell 1.

When the UE initiates handover from the macro cell F2, and if in this case, the guide cell 1 of the real cell 1 is in a working state but the guide cell 2 of the real cell 1 is not in a working state, the HNB GW does not determine a target cell according to a system frame number offset (SFN-offset) solution for an intra-frequency Iu interface until the guide cell 2 is in the working state; and delivers a handover message to a base station corresponding to the real cell 1. The UE is first handed over to the guide cell 2, and the base station then performs physical channel reconfiguration through an air interface once, so as to hand over the UE to a real inter-frequency real cell 1.

When the UE initiates handover from the macro cell F3, the handover may be performed according to a normal intra-frequency handover process.

### Case 2:

When the UE initiates handover from the macro cell F1, and if in this case, the guide cell 1 of the real cell 1 is in a working state, an RNC determines a target cell according to an intra-frequency Iu interface system frame number offset (SFN-offset) solution, and delivers a handover message to a base station corresponding to the real cell 1. The UE is first handed over to the guide cell 1, and the base station then performs physical channel reconfiguration through an air interface once, so as to hand over the UE to a real inter-frequency real cell 1.

When the UE initiates handover from the macro cell F2, and if in this case, the guide cell 1 of the real cell 1 is in a working state but the guide cell 2 of the real cell 1 is not in a working state, the RNC does not determine a target cell according to a system frame number offset (SFN-offset) solution for an intra-frequency Iu interface until the guide cell 2 is in the working state; and delivers a handover message to a base station corresponding to the real cell 1. The UE is first handed over to the guide cell 2, and the base station then performs physical channel reconfiguration through an air interface once, so as to hand over the UE to a real inter-frequency real cell 1.

When the UE initiates handover from the macro cell F3, the handover may be performed according to a normal intra-frequency handover process.

According to the cell handover method provided in this embodiment of the present invention, when handover is performed between inter-frequency cells, a UE is first handed over from a source cell to a guide cell that has a same frequency as the source cell and handed over from the guide cell to a real cell that has a same PSC as the guide cell, which can resolve a problem that in the case of inter-frequency networking of a macro cell and a micro-type cell, cell handover cannot be implemented because configurable neighboring cells are limited.

It should be noted that, due to a limitation on a radio-frequency transceiver channel, a guide cell can work only in a state in which the guide cell has a same frequency as a macro network. In this case, if the UE is handed over from a macro network of another frequency to a real cell 1, call drop may occur. Therefore, a shifting time and a proportion of a radio-frequency channel for working in each guide cell may be adjusted by using a service and traffic statistics of a macro network of a live network, so as to reduce impact of call drop during handover on a key performance indicator of a network.

The foregoing describes a case in which the macro network uses three frequencies. It should be noted that, the present invention is also applicable to a case in which the macro network uses more than three frequencies.

In a case in which the macro network uses n (n>3) frequencies (F1, F2...Fn), a single pair of radio-frequency transceiver channels are used to establish guide cells that have a same frequency as F1...Fn-1 macro cells but have a different scrambling code. Because one pair of radio-frequency transceiver channels can simultaneously work in a state of only one guide cell, the radio-frequency transceiver channels need to hand over in turn from a state of a guide cell 1 to a state of a guide cell n-1. That is, the guide cell 1 is first established, a frequency of the guide cell 1 is configured the same as a frequency of a macro cell F1, and a PSC of the guide cell 1 is the same as a PSC of a real cell 1; after working for a period of time, a guide cell is re-established as a guide cell 2, a frequency of the guide cell 2 is adjusted to be the same as a frequency of a macro cell F2, and a PSC of the guide cell 2 is still the same as the PSC of the real cell 1; after working for a period of time, a guide cell is re-established as a guide cell 3, a frequency of the guide cell 3 is adjusted to be the same as a frequency of a macro cell F3, and a PSC of the guide cell 3 is still the same as the PSC of the real cell 1; subsequent operations are performed by analog, until a guide cell n-1 is re-established, a frequency of the guide cell n-1 is adjusted to be the same as a frequency of a macro cell Fn-1, and a PSC of the guide cell n-1 is still the same as the PSC of the real cell 1.

It should be noted that, compared with technical solutions in the prior art, a method involved in the present invention for inter-frequency handover from a macro network to a micro-type cell has the following advantages:
1. The following problem is resolved: in the case of inter-frequency networking of a macro cell and a micro-type cell, cell handover cannot be implemented because configurable neighboring cells are limited. Therefore, a handover success rate and a key performance indicator of an entire network are effectively improved.
2. A handover process can be completed inside a base station, and the base station does not need to interact with an HNB GW/RNC or a core network.
3. The technology can support interconnection with a third party RNC for use without modifying an existing standard procedure and information element.
4. In a scenario in which a macro network uses multiple frequencies, by using a cell shifting working manner, there is no need to use multiple sets of radio-frequency transceiver channels to respectively establish guide cells, and therefore application costs can be effectively reduced.

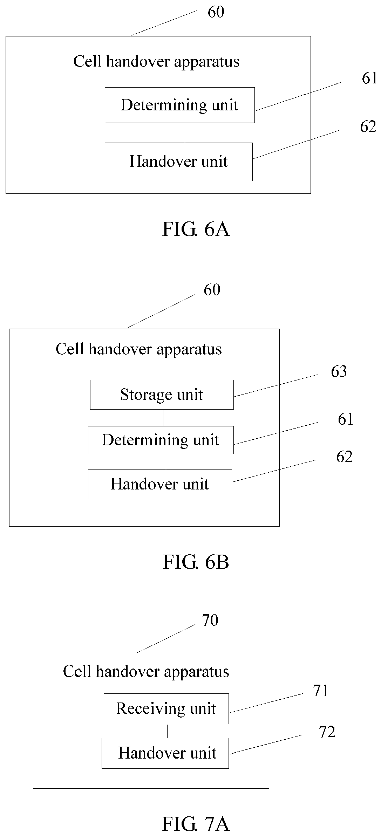

Corresponding to the foregoing cell handover method, an embodiment which is not part of the present invention further provides a cell handover apparatus. FIG. 6A is a structural block diagram of the cell handover apparatus according to this embodiment which is not part of the present invention. Referring to FIG. 6A, a cell handover apparatus 60 provided in this embodiment which is not part of the present invention includes a determining unit 61 and a handover unit 62.

The determining unit 61 is configured to determine a guide cell of a target base station according to an intra-frequency measurement report reported by a UE.

The handover unit 62 is configured to hand over the UE from a source cell of a source base station to the guide cell of the target base station, so that the target base station hands over the UE from the guide cell to a real target cell of the target base station.

The guide cell of the target base station is a virtual guide cell that has a same frequency as the source cell of the source base station but has a different primary scrambling code (Primary Scrambling Code, PSC), and the real target cell of the target base station is a real cell that has a different frequency from the guide cell but has a same PSC.

According to the cell handover apparatus provided in this embodiment which is not part of the present invention, when handover is performed between inter-frequency cells, a UE is first handed over from a source cell to a guide cell that has a same frequency as the source cell, and handed over from the guide cell to a real cell that has a same PSC as the guide cell. Handover between the source cell and the guide cell is handover between intra-frequency cells, and the guide cell has the same PSC as the real cell; this can resolve a problem that in the case of inter-frequency networking of a macro cell and a micro-type cell, cell handover cannot be implemented because configurable neighboring cells are limited.

In an embodiment which is not part of the present invention, referring to FIG. 6B, the source cell is a macro cell, and there is at least one real cell that has a different frequency from the source cell in a coverage area of the source cell; the apparatus 60 may further include:
a storage unit 63, configured to: before the determining unit 61 determines the guide cell according to the intra-frequency measurement report reported by the UE, store a virtual guide cell of the source cell corresponding to each real cell of the source cell.

In this case, the determining unit 61 may be specifically configured to:
determine the guide cell from the stored virtual guide cell according to the intra-frequency measurement report reported by the UE.

Further, in another embodiment which is not part of the present invention, the storage unit 63 is further configured to: before the determining unit 61 determines the guide cell according to the intra-frequency measurement report reported by the UE, store a correspondence between a virtual neighboring cell of the macro cell and the virtual guide cell.

The determining unit 61 may be specifically configured to:
determine the guide cell from the stored virtual guide cell according to the intra-frequency measurement report reported by the UE and the correspondence between the virtual neighboring cell of the macro cell and the virtual guide cell.

In this embodiment which is not part of the present invention, the handover unit 62 may be specifically configured to:
send a relocation request message to the target base station, so that the target base station hands over the UE from the source cell of the source base station to the guide cell of the target base station according to the relocation request message.

The relocation request message is sent on a frequency channel that is different from a working frequency channel of the target base station.

It should be noted that, in this embodiment which is not part of the present invention, the source cell is a macro cell, and the real cell is a micro-type real cell.

Corresponding to the foregoing cell handover method, an embodiment of the present invention further provides a cell handover apparatus. FIG. 7A is a structural block diagram of the cell handover apparatus according to this embodiment of the present invention. Referring to FIG. 7A, a cell handover apparatus 70 provided in this embodiment of the present invention includes a receiving unit 71 and a handover unit 72.

The receiving unit 71 is configured to receive a relocation request message, where the relocation request message is used to indicate a guide cell that is of the apparatus and to which a user equipment is to be handed over from a source cell of a source base station.

The handover unit 72 is configured to hand over the user equipment to the guide cell according to the relocation request message received by the receiving unit 71.

The handover unit 72 is further configured to hand over the user equipment from the guide cell to a real target cell of the apparatus.

The guide cell of the apparatus is a cell that has a same frequency as the source cell of the source base station but has a different primary scrambling code, and the real target cell of the apparatus is a cell that has a different frequency from the guide cell but has a same primary scrambling code.

It should also be noted that, in this embodiment of the present invention, the source cell of the source base station is one cell in numerous cells of the source base station. Both the guide cell and the real target cell are cells in numerous cells of the apparatus. The guide cell has a same frequency as the source cell, and the real target cell has a different frequency from the source cell.

According to the cell handover apparatus provided in this embodiment of the present invention, when handover is performed between inter-frequency cells, a UE is first handed over from a source cell to a guide cell that has a same frequency as the source cell, and handed over from the guide cell to a real cell that has a same PSC as the guide cell. Handover between the source cell and the guide cell is handover between intra-frequency cells, and the guide cell has the same PSC as the real cell; this can resolve a problem that in the case of inter-frequency networking of a macro cell and a micro-type cell, cell handover cannot be implemented because configurable neighboring cells are limited.

In an embodiment of the present invention, the receiving unit 71 may be specifically configured to:
receive the relocation request message on a frequency channel that is different from a working frequency channel of the apparatus.

Further, in another embodiment of the present invention, the handover unit 72 may be specifically configured to:
hand over the user equipment from the guide cell to the real target cell of the apparatus by means of physical channel reconfiguration.

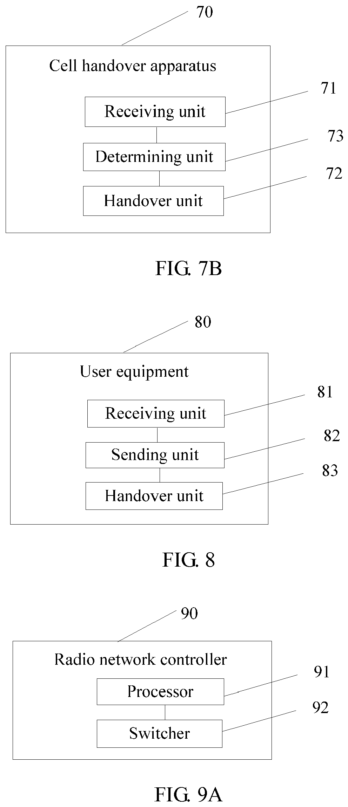

In still another embodiment of the present invention, as shown in FIG. 7B, the apparatus may further include:
a determining unit 73, configured to: before the handover unit 72 hands over the user equipment to the guide cell according to the relocation request message, determine whether the guide cell is in a working state.

The handover unit 72 is specifically configured to:
when the determining unit 73 determines that the guide cell is in the working state, hand over the user equipment to the guide cell according to the relocation request message.

Still further, in still another embodiment of the present invention, the real target cell of the apparatus has at least one guide cell, and the determining unit 73 is specifically configured to:
determine, according to a preset working sequence and working time for each guide cell of the real target cell, whether the guide cell is in the working state.

It should be noted that, in this embodiment of the present invention, the source base station is a macro base station, the source cell is a macro cell, the apparatus is a micro base station, and the real cell is a real micro-type cell.

Accordingly, an embodiment which is not part of the present invention further provides a user equipment. FIG. 8 is a structural block diagram of the user equipment according to this embodiment which is not part of the present invention. Referring to FIG. 8, user equipment 80 provided in this embodiment which is not part of the present invention includes a receiving unit 81, a sending unit 82, and a handover unit 83.

The user equipment 80 includes:
the receiving unit 81, configured to receive a physical channel reconfiguration message sent by a target base station, where the physical channel reconfiguration message is used to indicate a real target cell that is of the target base station and to which the user equipment is to be handed over, and the real target cell of the target base station is a cell to which the user equipment is to be handed over after the target base station hands over the user equipment from a source cell of a source base station to a guide cell of the target base station;
the sending unit 82, configured to send a physical channel reconfiguration complete message to the target base station; and
the handover unit 83, configured to hand over the user equipment to the real target cell.

The guide cell of the target base station is a cell that has a same frequency as the source cell of the source base station but has a different primary scrambling code, and the real target cell of the target base station is a cell that has a different frequency from the guide cell but has a same primary scrambling code.

According to the user equipment provided in this embodiment which is not part of the present invention, when handover is performed between inter-frequency cells, a UE is first handed over from a source cell to a guide cell that has a same frequency as the source cell and handed over from the guide cell to a real target cell that has a same PSC as the guide cell, which can resolve a problem that in the case of inter-frequency networking of a macro cell and a micro-type cell, cell handover cannot be implemented because configurable neighboring cells are limited.

Corresponding to the foregoing cell handover method, an embodiment which is not part of the present invention further provides an RNC. FIG. 9A is a structural block diagram of the RNC according to this embodiment of the present invention. Referring to FIG. 9A, an RNC 90 provided in this embodiment of the present invention includes a processor 91 and a switcher 92.

The processor 91 is configured to determine a guide cell of a target base station according to an intra-frequency measurement report reported by a UE.

The switcher 92 is configured to hand over the UE from a source cell of a source base station to the guide cell of the target base station, so that the target base station hands over the UE from the guide cell to a real target cell of the target base station.

The guide cell of the target base station is a virtual guide cell that has a same frequency as the source cell of the source base station but has a different primary scrambling code (Primary Scrambling Code, PSC), and the real target cell of the target base station is a real cell that has a different frequency from the guide cell but has a same PSC.

According to the RNC provided in this embodiment which is not part of the present invention, when handover is performed between inter-frequency cells, a UE is first handed over from a source cell to a guide cell that has a same frequency as the source cell, and handed over from the guide cell to a real cell that has a same PSC as the guide cell. Handover between the source cell and the guide cell is handover between intra-frequency cells, and the guide cell has the same PSC as the real cell; this can resolve a problem that in the case of inter-frequency networking of a macro cell and a micro-type cell, cell handover cannot be implemented because configurable neighboring cells are limited.

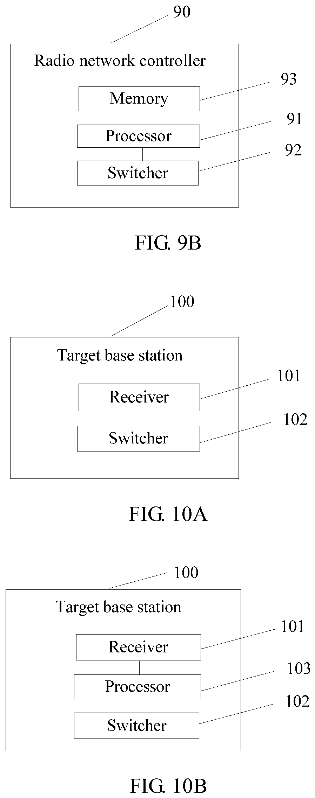

FIG. 9B is another structural block diagram of the RNC according to this embodiment which is not part of the present invention. Referring to FIG. 9B, in an embodiment which is not part of the present invention, the source cell is a macro cell, and there is at least one real cell that has a different frequency from the source cell in a coverage area of the source cell; the RNC 90 further includes:
a memory 93, configured to: before the processor 91 determines the guide cell according to the intra-frequency measurement report reported by the UE, store a virtual guide cell of the source cell corresponding to each real cell of the source cell.

In this case, the processor 91 is specifically configured to:
determine the guide cell from the stored virtual guide cell according to the intra-frequency measurement report reported by the UE.

Further, in another embodiment which is not part of the present invention, the memory 93 is further configured to: before the processor determines the guide cell according to the intra-frequency measurement report reported by the UE, store a correspondence between a virtual neighboring cell of the macro cell and the virtual guide cell.

The processor 91 is specifically configured to:
determine the guide cell from the stored virtual guide cell according to the intra-frequency measurement report reported by the UE and the correspondence between the virtual neighboring cell of the macro cell and the virtual guide cell.

In this embodiment which is not part of the present invention, the switcher 92 may be specifically configured to:
send a relocation request message to the target base station, so that the target base station hands over the UE from the source cell of the source base station to the guide cell of the target base station according to the relocation request message.

The relocation request message is sent on a frequency channel that is different from a working frequency channel of the target base station.

It should be noted that, in this embodiment which is not part of the present invention, the source base station is a macro base station, the source cell is a macro cell, the target base station is a micro base station, and the real cell is a real micro-type cell.

Corresponding to the foregoing cell handover method, an embodiment of the present invention further provides a target base station. Referring to FIG. 10A, a target base station 100 provided in this embodiment of the present invention includes a receiver 101 and a switcher 102.

The receiver 101 is configured to receive a relocation request message, where the relocation request message is used to indicate a guide cell that is of the target base station and to which a UE is to be handed over from a source cell of a source base station.

The switcher 102 is configured to hand over the user equipment to the guide cell according to the relocation request message received by the receiver 101, and hand over the user equipment from the guide cell to a real target cell of the target base station.

The guide cell of the target base station is a cell that has a same frequency as the source cell of the source base station but has a different primary scrambling code, and the real target cell of the target base station is a cell that has a different frequency from the guide cell but has a same primary scrambling code.

It should also be noted that, in this embodiment of the present invention, the source base station and the target base station are neighboring base stations. The source cell of the source base station is one cell in numerous cells of the source base station. Both the guide cell and the real target cell are cells in numerous cells of the target base station. The guide cell has a same frequency as the source cell, and the real target cell has a different frequency from the source cell.

According to the target base station provided in this embodiment of the present invention, when handover is performed between inter-frequency cells, a UE is first handed over from a source cell to a guide cell that has a same frequency as the source cell, and handed over from the guide cell to a real cell that has a same PSC as the guide cell. Handover between the source cell and the guide cell is handover between intra-frequency cells, and the guide cell has the same PSC as the real cell; this can resolve a problem that in the case of inter-frequency networking of a macro cell and a micro-type cell, cell handover cannot be implemented because configurable neighboring cells are limited.

In an embodiment of the present invention, the receiver 101 is specifically configured to:
receive the relocation request message on a frequency channel that is different from a working frequency channel of the target base station.

Further, in another embodiment of the present invention, the switcher 93 may be specifically configured to:
hand over the user equipment from the guide cell to the real target cell of the target base station by means of physical channel reconfiguration.

In still another embodiment of the present invention, as shown in FIG. 10B, the target base station further includes:
a processor 103, configured to: before the switcher 102 hands over the user equipment to the guide cell according to the relocation request message, determine whether the guide cell is in a working state.

In this case, the switcher 102 is specifically configured to:
when the processor 103 determines that the guide cell is in the working state, hand over the user equipment to the guide cell according to the relocation request message.

Further, in still another embodiment of the present invention, the real target cell of the target base station has at least one guide cell, and the processor 103 is specifically configured to:
determine, according to a preset working sequence and working time for each guide cell of the real target cell, whether the guide cell is in the working state.

It should be noted that, in this embodiment of the present invention, the source base station is a macro base station, the source cell is a macro cell, the target base station is a micro base station, and the real cell is a real micro-type cell.

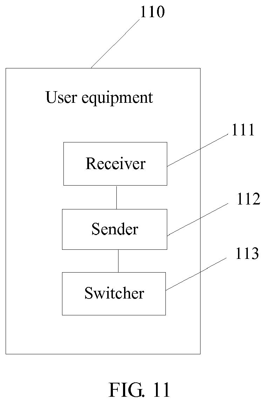

Accordingly, referring to FIG. 11, an embodiment which is not part of the present invention further provides a user equipment 110, where the user equipment 110 includes:
a receiver 111, configured to receive a physical channel reconfiguration message sent by a target base station, where the physical channel reconfiguration message is used to indicate a real target cell that is of the target base station and to which the user equipment is to be handed over, and the real target cell of the target base station is a cell to which the user equipment is to be handed over after the target base station hands over the user equipment from a source cell of a source base station to a guide cell of the target base station;
a sender 112, configured to send a physical channel reconfiguration complete message to the target base station; and
a switcher 113, configured to hand over the user equipment to the real target cell.

The guide cell of the target base station is a cell that has a same frequency as the source cell of the source base station but has a different primary scrambling code, and the real target cell of the target base station is a cell that has a different frequency from the guide cell but has a same primary scrambling code.

According to the user equipment provided in this embodiment which is not part of the present invention, when handover is performed between inter-frequency cells, a UE is first handed over from a source cell to a guide cell that has a same frequency as the source cell and handed over from the guide cell to a real target cell that has a same PSC as the guide cell, which can resolve a problem that in the case of inter-frequency networking of a macro cell and a micro-type cell, cell handover cannot be implemented because configurable neighboring cells are limited.

In addition, an embodiment which is not part of the present invention further provides a cell handover network system, where the network system includes an RNC, a base station, and user equipment. The RNC may be any RNC provided in the foregoing embodiments of the present invention. The base station may be any base station provided in the foregoing embodiments of the present invention. The user equipment may be any user equipment provided in the foregoing embodiments which are not part of the present invention. Because the RNC and the base station have been described above in detail, details are not described herein again. For related content, refer to the foregoing description.

It should be noted that, in the foregoing cell handover apparatus embodiments, the unit division is merely logical function division, but the present invention is not limited to the foregoing division, as long as corresponding functions can be implemented. In addition, specific names of the functional units are merely provided for the purpose of distinguishing the units from one another, but are not intended to limit the protection scope of the present invention.

Each embodiment in the specification is described with emphasis. The same or similar parts in the embodiments are references to each other. Each embodiment focuses on description of a difference from the other embodiments. Especially, an apparatus embodiment is basically similar to a method embodiment, and therefore is described briefly; for related parts, refer to partial descriptions in the method embodiment.

It should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

A person of ordinary skill in the art may understand that, each aspect of the present invention or a possible implementation manner of each aspect may be specifically implemented as a system, a method, or a computer program product. Therefore, each aspect of the present invention or a possible implementation manner of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation manner of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

## Claims

1. A cell handover method, comprising:
receiving (21), by a target base station, a relocation request message, wherein the relocation request message is used to indicate a guide cell that is of the target base station and to which a user equipment is to be handed over from a source cell of a source base station;
**characterized by**
handing over (22), by the target base station, the user equipment to the guide cell that has the same frequency as the source cell of the source base station but has a different primary scrambling code according to the relocation request message; and
handing over (23), by the target base station, the user equipment from the guide cell to a real target cell of the target base station that has a different frequency from the guide cell but has the same primary scrambling code.

2. The method according to claim 1, wherein the receiving, by a target base station, a relocation request message comprises:
receiving, by the target base station, the relocation request message on a frequency channel that is different from a working frequency channel of the target base station.

3. The method according to claim 2, wherein the handing over, by the target base station, the user equipment from the guide cell to a real target cell of the target base station is specifically:
handing over, by the target base station, the user equipment from the guide cell to the real target cell of the target base station by means of physical channel reconfiguration.

4. The method according to any one of claims 1 to 3, wherein before the handing over, by the target base station, the user equipment to the guide cell according to the relocation request message, the method further comprises:
determining whether the guide cell is in a working state; wherein
the handing over, by the target base station, the user equipment to the guide cell according to the relocation request message comprises:
when the target base station determines that the guide cell is in the working state, handing over, by the target base station, the user equipment to the guide cell according to the relocation request message.

5. The method according to any one of claims 1 to 4, wherein the source base station is a macro base station, and the target base station is a micro base station.

6. A cell handover apparatus comprising:
a receiving unit (71), configured to receive a relocation request message, wherein the relocation request message is used to indicate a guide cell that is of the apparatus and to which a user equipment is to be handed over from a source cell of a source base station and that has the same frequency as the source cell of the source base station but has a different primary scrambling code;
**characterized by**
a handover unit (72), configured to hand over the user equipment to the guide cell according to the relocation request message; wherein
the handover unit (72) is further configured to hand over the user equipment from the guide cell to a real target cell of the apparatus that has a different frequency from the guide cell but has the same primary scrambling code.

7. The apparatus according to claim 6, wherein the receiving unit (71) is specifically configured to:
receive the relocation request message on a frequency channel that is different from a working frequency channel of the apparatus.

8. The apparatus according to claim 7, wherein the handover unit (72) is specifically configured to:
hand over the user equipment from the guide cell to the real target cell of the apparatus by means of physical channel reconfiguration.

9. The apparatus according to any one of claims 6 to 8, wherein the apparatus further comprises:
a determining unit (73), configured to: before the handover unit (72) hands over the user equipment to the guide cell according to the relocation request message, determine whether the guide cell is in a working state; wherein
the handover unit (72) is specifically configured to:
when the determining unit (73) determines that the guide cell is in the working state, hand over the user equipment to the guide cell according to the relocation request message.

## Patentansprüche

1. Verfahren der Zellenübergabe, Folgendes umfassend:
Empfangen (21) durch eine Ziel-Basisstation, einer Verlagerungsanforderungsnachricht, wobei die Verlagerungsanforderungsnachricht dazu genutzt wird, eine Führungszelle zu bezeichnen, die von der Ziel-Basisstation stammt und an die ein Benutzergerät von einer Ursprungszelle einer Ursprungs-Basisstation zu übergeben ist;
**gekennzeichnet durch**
Übergeben (22), durch die Ziel-Basisstation, des Benutzergeräts an die Führungszelle, welche dieselbe Frequenz wie die Ursprungszelle der Ursprungs-Basisstation aufweist, jedoch einen unterschiedlichen primären Verschlüsselungscode gemäß der Verlagerungsanforderungsnachricht aufweist; und
Übergeben (23), durch die Ziel-Basisstation, des Benutzergeräts an eine reale Zielzelle der Ziel-Basisstation, welche eine unterschiedliche Frequenz gegenüber der Führungszelle aufweist, jedoch denselben primären Verschlüsselungscode aufweist.

2. Verfahren nach Anspruch 1, wobei das Empfangen einer Verlagerungsanforderungsnachricht durch eine Ziel-Basisstation Folgendes umfasst:
Empfangen, durch die Ziel-Basisstation, der Verlagerungsanforderungsnachricht auf einem Frequenzkanal, der sich von einem aktiven Frequenzkanal der Ziel-Basisstation unterscheidet.

3. Verfahren nach Anspruch 2, wobei die Übergabe, durch die Ziel-Basisstation, des Benutzergeräts von der Führungszelle zu einer realen Zielzelle der Ziel-Basisstation im Besonderen Folgendes ist:
Übergeben, durch die Ziel-Basisstation, des Benutzergeräts von der Führungszelle zur realen Zielzelle der Ziel-Basisstation mittels physischer Kanalrekonfiguration.

4. Verfahren nach einem der Ansprüche 1 bis 3, wobei das Verfahren vor der Übergabe des Benutzergeräts durch die Ziel-Basisstation an die Führungszelle gemäß der Verlagerungsanforderungsnachricht außerdem Folgendes umfasst:
Ermitteln, ob sich die Führungszelle in einem Betriebszustand befindet; wobei
die Übergabe des Benutzergeräts durch die Ziel-Basisstation an die Führungszelle gemäß der Verlagerungsanforderungsnachricht Folgendes umfasst:
wenn die Ziel-Basisstation ermittelt, dass sich die Führungszelle im Betriebszustand befindet, Übergeben des Benutzergeräts durch die Ziel-Basisstation an die Führungszelle gemäß der Verlagerungsanforderungsnachricht.

5. Verfahren nach einem der Ansprüche 1 bis 4, wobei die Ursprungs-Basisstation eine Makrobasisstation ist und die Ziel-Basisstation eine Mikrobasisstation ist.

6. Vorrichtung zur Zellenübergabe, Folgendes umfassend:
eine Empfangseinheit (71), welche dafür eingerichtet ist, eine Verlagerungsanforderungsnachricht zu empfangen, wobei die Verlagerungsanforderungsnachricht dazu genutzt wird, eine Führungszelle zu bezeichnen, die von der Vorrichtung stammt und an die ein Benutzergerät von einer Ursprungszelle einer Ursprungs-Basisstation zu übergeben ist, und welche dieselbe Frequenz wie die Ursprungszelle der Ursprungs-Basisstation aufweist, jedoch einen unterschiedlichen primären Verschlüsselungscode aufweist;
**gekennzeichnet durch**
eine Übergabeeinheit (72), welche dafür eingerichtet ist, das Benutzergerät an die Führungszelle gemäß der Verlagerungsanforderungsnachricht zu übergeben; wobei
die Übergabeeinheit (72) außerdem dafür eingerichtet ist, das Benutzergerät von der Führungszelle an eine reale Zielzelle der Vorrichtung zu übergeben, welche eine unterschiedliche Frequenz gegenüber der Führungszelle aufweist, jedoch denselben primären Verschlüsselungscode aufweist.

7. Vorrichtung nach Anspruch 6, wobei die Empfangseinheit (71) im Besonderen für Folgendes eingerichtet ist:
Empfangen der Verlagerungsanforderungsnachricht auf einem Frequenzkanal, der sich von einem aktiven Frequenzkanal der Vorrichtung unterscheidet.

8. Vorrichtung nach Anspruch 7, wobei die Übergabeeinheit (72) im Besonderen für Folgendes eingerichtet ist:
Übergeben des Benutzergeräts von der Führungszelle zur realen Zielzelle der Vorrichtung mittels physischer Kanalrekonfiguration.

9. Vorrichtung nach einem der Ansprüche 6 bis 8, wobei die Vorrichtung außerdem Folgendes umfasst:
eine Ermittlungseinheit (73), die für Folgendes eingerichtet ist: Ermitteln, bevor die Übergabeeinheit (72) das Benutzergerät an die Führungszelle gemäß der Verlagerungsanforderungsnachricht übergibt, ob sich die Führungszelle in einem Betriebszustand befindet; wobei
die Übergabeeinheit (72) im Besonderen für Folgendes eingerichtet ist:
wenn die Ermittlungseinheit (73) ermittelt, dass sich die Führungszelle im Betriebszustand befindet, Übergeben des Benutzergeräts an die Führungszelle gemäß der Verlagerungsanforderungsnachricht.

## Revendications

1. Procédé de transfert de cellule, comprenant :
la réception (21), par une station de base cible, d'un message de demande de relocalisation, dans lequel le message de demande de relocalisation est utilisé pour indiquer une cellule guide qui provient de la station de base cible et à laquelle un équipement utilisateur doit être transféré depuis une cellule source d'une station de base source ;
**caractérisé par**
le transfert (22), par la station de base cible, de l'équipement utilisateur à la cellule guide qui a la même fréquence que la cellule source de la station de base source mais a un code d'embrouillage primaire différent selon le message de demande de relocalisation ; et
le transfert (23), par la station de base cible, de l'équipement utilisateur depuis la cellule guide à une cellule cible réelle de la station de base cible qui a une fréquence différente de la cellule guide mais a le même code d'embrouillage primaire.

2. Procédé selon la revendication 1, dans lequel la réception, par une station de base cible, d'un message de demande de relocalisation comprend :
la réception, par la station de base cible, du message de demande de relocalisation sur un canal de fréquence qui est différent d'un canal de fréquence de fonctionnement de la station de base cible.

3. Procédé selon la revendication 2, dans lequel le transfert, par la station de base cible, de l'équipement utilisateur depuis la cellule guide à une cellule cible réelle de la station de base cible est spécifiquement :
le transfert, par la station de base cible, de l'équipement utilisateur depuis la cellule guide à la cellule cible réelle de la station de base cible au moyen d'une reconfiguration de canal physique.

4. Procédé selon l'une quelconque des revendications 1 à 3, dans lequel avant le transfert, par la station de base cible, de l'équipement utilisateur à la cellule guide selon le message de demande de relocalisation, le procédé comprend en outre :
le fait de déterminer si la cellule guide est dans un état de fonctionnement ; dans lequel
le transfert, par la station de base cible, de l'équipement utilisateur à la cellule guide selon le message de demande de relocalisation comprend :
lorsque la station de base cible détermine que la cellule guide est dans l'état de fonctionnement, le transfert, par la station de base cible, de l'équipement utilisateur à la cellule guide selon le message de demande de relocalisation.

5. Procédé selon l'une quelconque des revendications 1 à 4, dans lequel la station de base source est une macro station de base, et la station de base cible est une micro station de base.

6. Appareil de transfert de cellule comprenant :
une unité de réception (71), configurée pour recevoir un message de demande de relocalisation, dans lequel le message de demande de relocalisation est utilisé pour indiquer une cellule guide qui provient de l'appareil et à laquelle un équipement utilisateur doit être transféré depuis une cellule source d'une station de base source et qui a la même fréquence que la cellule source de la station de base source mais a un code d'embrouillage primaire différent ;
**caractérisé par**
une unité de transfert (72), configurée pour transférer l'équipement utilisateur à la cellule guide selon le message de demande de relocalisation ; dans lequel
l'unité de transfert (72) est en outre configurée pour transférer l'équipement utilisateur depuis la cellule guide à une cellule cible réelle de l'appareil qui a une fréquence différente de la cellule guide mais a le même code d'embrouillage primaire.

7. Appareil selon la revendication 6, dans lequel l'unité de réception (71) est configurée spécifiquement pour :
recevoir le message de demande de relocalisation sur un canal de fréquence qui est différent d'un canal de fréquence de fonctionnement de l'appareil.

8. Appareil selon la revendication 7, dans lequel l'unité de transfert (72) est configurée spécifiquement pour :
transférer l'équipement utilisateur depuis la cellule guide à la cellule cible réelle de l'appareil au moyen d'une reconfiguration de canal physique.

9. Appareil selon l'une quelconque des revendications 6 à 8, dans lequel l'appareil comprend en outre :
une unité de détermination (73), configurée pour : avant que l'unité de transfert (72) transfère l'équipement utilisateur à la cellule guide selon le message de demande de relocalisation, déterminer si la cellule guide est dans un état de fonctionnement ; dans lequel
l'unité de transfert (72) est configurée spécifiquement pour :
lorsque l'unité de détermination (73) détermine que la cellule guide est dans l'état de fonctionnement, transférer l'équipement utilisateur à la cellule guide selon le message de demande de relocalisation.
